# EUROPEAN PATENT SPECIFICATION

(11) **EP 2 823 185 B1**
(45) Date of publication and mention of the grant of the patent: **21.02.2018**
(21) Application number: 12710400.8
(22) Date of filing: 08.03.2012
(51) Int. Cl.: F16B 2/08, F16L 3/24, H02G 3/32, B64D 27/00, B64D 27/26

(54) **METHOD AND ASSEMBLY FOR MOUNTING COMPONENTS ON BEAMS**
VERFAHREN UND VORRICHTUNG ZUM BEFESTIGEN VON KOMPONENTEN AN TRÄGERN
PROCÉDÉ ET DISPOSITIF DE MONTAGE DE COMPOSANTS SUR DES TRAVERSES

(43) Date of publication of application: 14.01.2015
(73) Proprietor: The Boeing Company, Chicago, IL 60606-1596 (US)
(72) Inventor: TIAN, Yuri, Mukilteo, Washington 98275 (US); GOTTWALD, Robert Pratt, Stanwood, Washington 98292 (US)
(74) Representative: Witte, Weller & Partner Patentanwälte mbB
(86) International application number: PCT/US2012/028220
(87) International publication number: WO 2013/133831

(56) References cited:
- DE-A1- 3 204 199
- LU-A1- 64 234
- US-A- 4 353 519
- US-A- 4 437 627
- US-A- 5 702 081
- US-A1- 2005 029 419

## Description

### BACKGROUND INFORMATION

### 1. Field:

The present disclosure relates to a method and assembly for mounting components on beams, particularly beams that have flat sides and are used as structural braces for aircraft engines.

### 2. Background:

It is sometimes desirable to mount system components on structural beams, struts, or braces used in vehicle applications. For example, in the aircraft industry, beams may be used as struts to support and/or brace engines on an aircraft wing. The beams along with other system components may be enclosed by a pylon fairing extending between the wing and the engine. Because the fairing may be designed to be as narrow as possible in order to reduce aerodynamic drag, the volume of space available within the fairing may be limited, requiring that the beams and system components be packaged within a relatively small width profile.

In the past, engine brace beams used in large commercial aircraft employed a substantially circular cross sectional shape. System components such as valves, tubes, hydraulic lines and electrical wiring were mounted on brackets which in turn were attached on the outside of circular band clamps around the beam. This prior component mounting arrangement resulted in the beam, the components and band clamp being stacked such that the surrounding fairing had to be designed to accommodate their combined overall width.

More recently, in order to reduce aerodynamic drag, the width of pylon fairings in some aircraft applications has been reduced, thereby reducing the internal space available to house engine brace beams and system components. In order to accommodate these narrower pylon fairings, the engine brace beams may be redesigned to present a more narrow width profile. For example, engine brace beams having a generally rectangular cross section may be employed with flat sides, such as beams having an H-shaped cross section. However difficulty may be encountered in mounting system components on brace beams having rectangular cross sectional shapes.

Document DE 32 04 199 A1 shows a block for mounting a shield to a pipe.

Document US 4 437 627 A shows an integrated power plant installation system for underwing high-bypass mid-length fan air duct core-mounted engines.

Accordingly, there is a need for a method and assembly for mounting components on beams having flat sides, including those that have generally rectangular cross sectional shapes. There is also a need for a method of reducing aerodynamic drag on an aerospace engine pylon by reducing the width of the engine pylon fairings using engine brace beams that have substantially flat sides and are therefore have a more narrow width profile.

### SUMMARY

According to the invention, there is provided an assembly according to claim 1 and a method according to claim 9.

The disclosed embodiments provide a method and assembly for mounting components on beams that have generally flat sides, such as those having a generally rectangular cross sectional shape, including beams having an H-shaped cross section. The mounting assembly permits simplified attachment of system components such as hydraulic lines, tubing, valves and electrical wiring while reducing the overall width profile of the combination of the beam and attached components. Consequently, use of the disclosed mounting assembly in combination with a beam having flat sides may allow the components to be mounted within a smaller space within an aircraft fairing, and/or may allow a greater number of system components to be mounted within the fairing. The mounting assembly includes multiple adapter members that are configured to match the cross section of the beam and are clamped to the beam by a loop-like strap wrapped around the adapter members. The adapter members include fastener holes or other fastening devices located beneath the loop-like strap that allow attachment of components directly to the adapter members at points as close to the brace beam as possible. In some embodiments, the components may be mounted on support brackets that are attached to the adapter members.

According to one disclosed embodiment, an assembly is provided for mounting a component on a beam having at least one generally flat side. The mounting assembly includes at least a first adapter member having a generally flat face engaging the flat side of the beam, and a strap for clamping the first adapter member against the generally flat side of the beam. The first adapter member is adapted to have a component attached thereto at a location in-board of the strap. The adapter member includes a generally curved outer face. As the strap is tensioned, it conforms to and bears against the curved outer face of the adapter member. The strap may be recessed within a groove in the outer face of the adapter member. The mounting assembly may further comprise a device for tightening the strap against the adapter member. The adapter member includes at least one opening therein for receiving a fastener for fastening the component to the adapter member. A portion of the adapter member may extend into an open interior of the beam.

According to another disclosed embodiment, an assembly is provided for mounting a component on a beam having a generally rectangular cross sectional shape and flat sides. The mounting assembly includes a plurality of adapter members each having a generally flat inner face engaging one of the flat sides of the beams, and a generally curved outer face. At least one of the adapter members is adapted to have at least one component attached thereto. The mounting assembly further includes a strap drawn against the generally curved outer faces of the adapter member for clamping the adapter members on the beam. At least one of the adapter members includes a component support bracket for supporting a component on the adapter member.

According to still another embodiment, a method is provided of mounting a component on a beam having generally flat sides. The method comprises positioning adapter members against the flat sides of the beams and wrapping a strap around the adapter members. The method further comprises clamping the adapter members against the beam by tensioning the strap, and attaching the component to at least one of the adapter members at a location in-board of the strap. The method further comprises attaching a component support bracket to one of the adapter members, and mounting a component on the support bracket.

According to a further embodiment, a method is provided of reducing aerodynamic drag on an aerospace engine pylon. The method comprises bracing an engine held on the pylon using a beam having two substantially flat sides, and positioning adapter members against the flat sides of the beam. The method further comprises wrapping a strap around the adapter members, using the strap to clamp the adapter members to the beam, and mounting at least one component on one of the adapter members. Mounting the component on the adaptor member is performed by fastening the component to the adapter member at a location on the adapter member in-board of the strap.

### BRIEF DESCRIPTION OF THE DRAWINGS

Figure 1 is an illustration of a side view of an aircraft.
Figure 2 is an illustration of a side view of a pylon attaching an engine to the wing of the aircraft shown in Figure 1.
Figure 3 is an illustration of a perspective view of the aft portion of the engine pylon shown in Figure 2, internal system components not illustrated for better clarity.
Figure 4 is an illustration of a perspective view of an engine brace beam forming part of the pylon shown in Figure 3, and also illustrating system components mounted on the beam.
Figure 5 is an illustration of a sectional view taken along the line 5-5 in Figure 4.
Figure 5A is an illustration of a sectional view taken along the line 5A-5A in Figure 5.
Figure 6 is an illustration similar to Figure 5 but showing the adapter members exploded to better reveal their profiles.
Figure 6A is an illustration of a perspective view of a band clamp prior to being installed around the adaptor members.
Figure 7 is a side view of one of the engine brace beams having system components mounted thereon by the disclosed mounting assemblies.
Figure 8 is an illustration of a sectional view taken along the line 8-8 in Figure 7.
Figure 9 is an illustration of a sectional view taken along the line 9-9 in Figure 7.
Figure 10 is an illustration of a perspective view of the engine brace beam shown in Figure 7.
Figure 11 is an illustration of a perspective view showing a series of mounting assemblies and system components, the engine brace beam being shown in the phantom.
Figure 12 is an illustration of a perspective view of a mounting assembly having an electrical wire attached thereto.
Figure 13 is an illustration similar to Figure 5 but showing one of the adapter members with an integrally formed bracket.
Figure 14 is an illustration of a sectional view taken along the line 14-14 in Figure 13.
Figure 15 is an illustration of a flow diagram of a method of mounting components on a beam.
Figure 16 is an illustration of a flow diagram of a method of reducing aerodynamic drag on an aerospace engine pylon.
Figure 17 is an illustration of a flow diagram of aircraft production and service methodology.
Figure 18 is an illustration of a block diagram of an aircraft.

### DETAILED DESCRIPTION

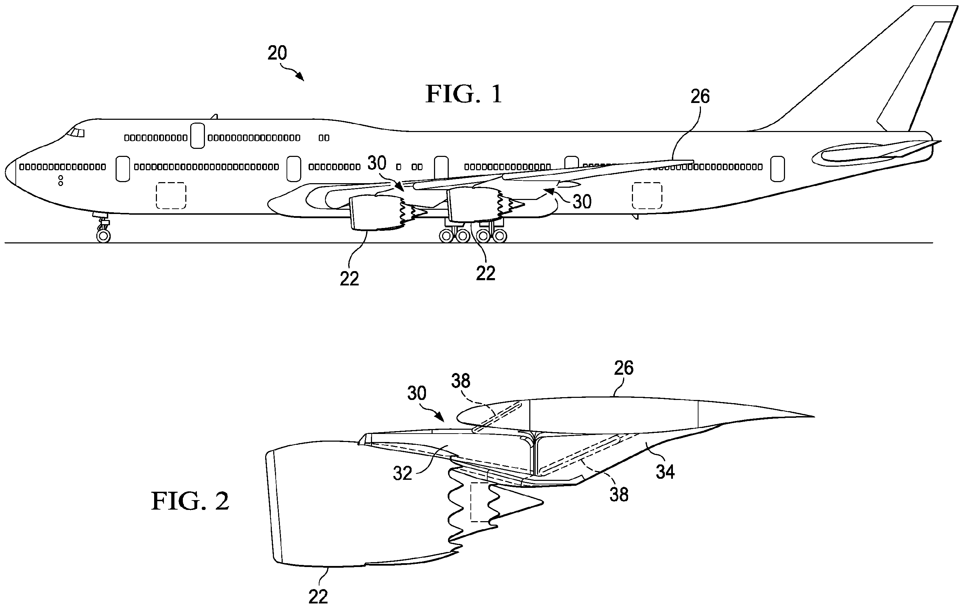

Referring first to Figure 1, an aerospace vehicle such as an aircraft 20 includes one or more engines 22 mounted on each wing 26 of the aircraft 20 by an engine pylon 30. As shown in Figure 2, each of the engine pylons 30 includes forward and aft fairings 32, 34 respectively, that may be designed and configured to minimize aerodynamic drag. A series of forward and aft diagonal engine brace beams 38 enclosed within the fairings 32, 34 function to transfer loads between the engine 22 and the wing 26.

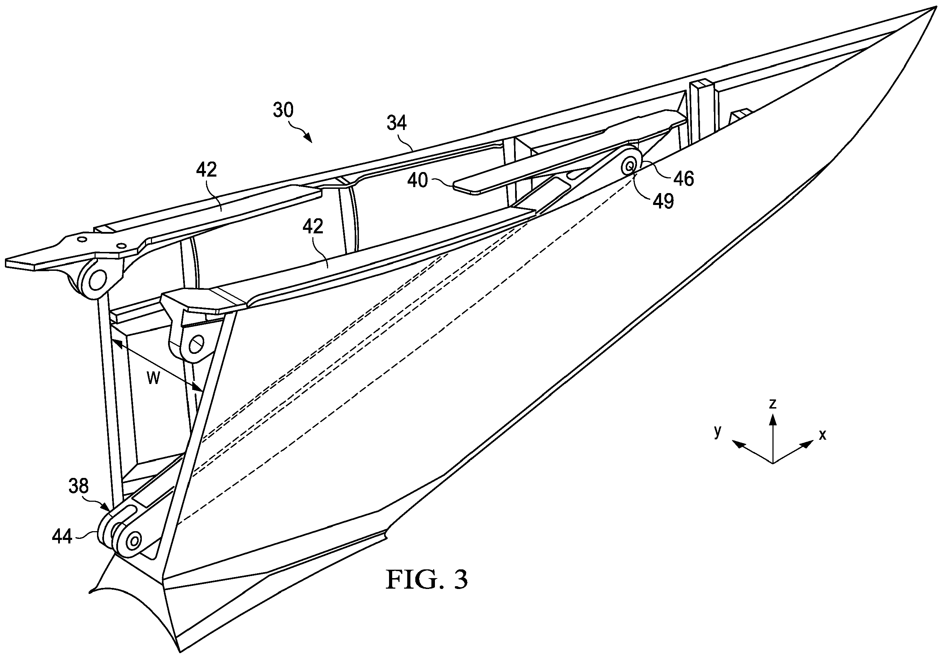

Figure 3 illustrates the aft fairing 34 along with an aft brace beam 38. The aft fairing 34 has a width "W" and may be tapered along its length to maximize its aerodynamic properties. The aft brace beam 38 includes a clevis 46 on one end thereof that is connected by a clevis pin 49 to an attachment 40 that mounts the aft brace beam 38 on the wing 26 (Figures 1 and 2). The other end of the brace beam 38 also includes a clevis 44 that is attached by a clevis pin (not shown) to the engine 22. The forward brace beams 38 (not shown in Figure 3) are similarly coupled by pin and clevis connections (not shown) between the engine 24 and a pair of wing attachments 42.

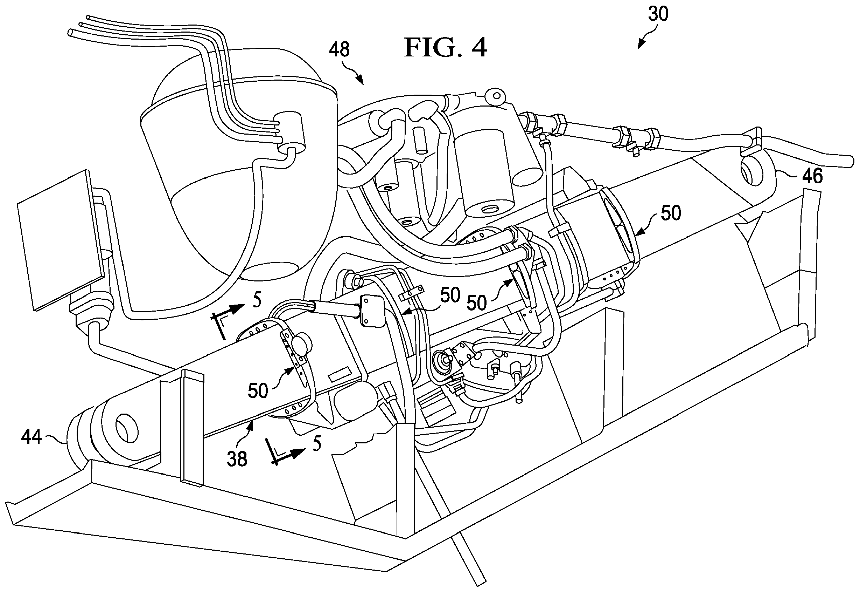

Referring to Figure 4, each of the engine pylons 30 includes a number of internal system components 48. The system components 48 may include but are not limited to hydraulic valves, fittings, hoses, tubes, and electrical wiring which may be related to control and/or monitoring of the engines 24. In order to locate and support the system components 48 within the pylon 30, at least some of the system components 48 may be attached to the brace beam 38 by one or more spaced apart, mounting assemblies 50.

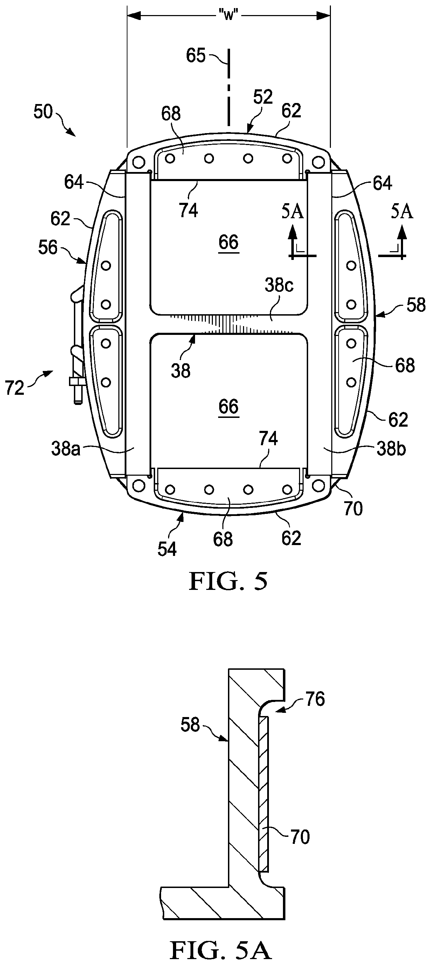

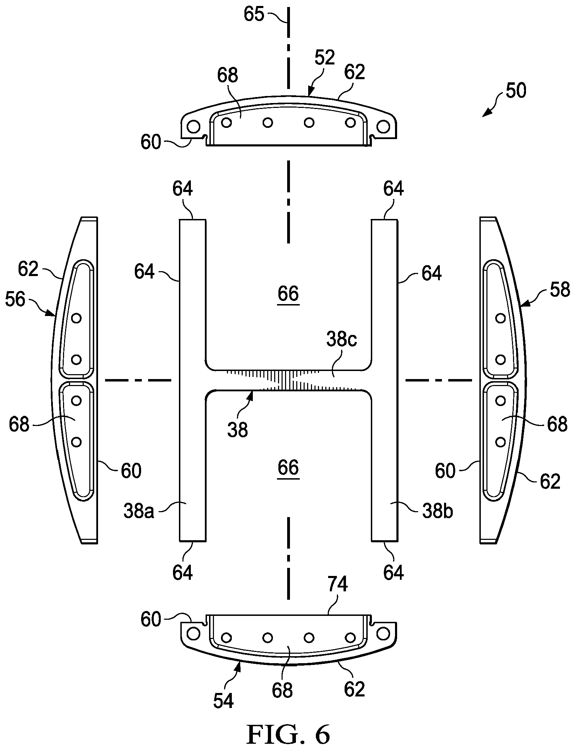

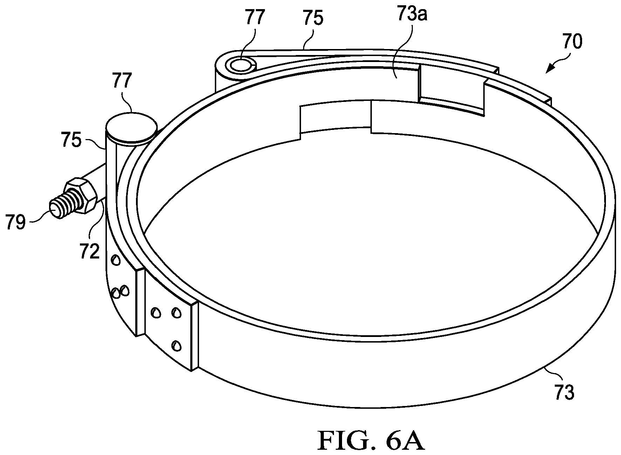

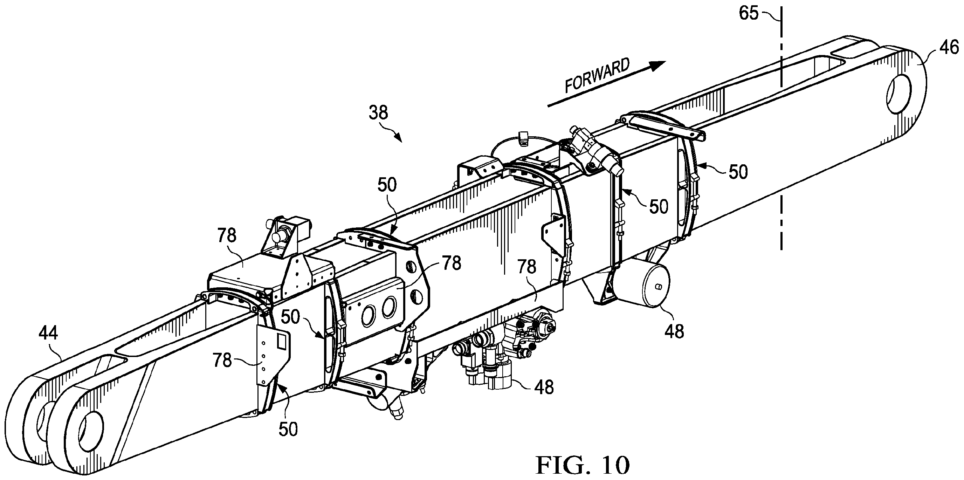

Attention is now directed to Figures 5, 5A and 6 which illustrate details of one of the mounting assemblies 50. In the embodiment illustrated in Figures 4- 6 and 7-11, the mounting assembly 50 is shown installed around a brace beam 38 having a generally rectangularly shaped cross section comprising a web 38c connecting a pair of flanges 38a, 38b which present generally flat outer sides 64. The flanges 38a, 38b and the web 38c form an H-shaped cross section with open interior areas 66. The disclosed mounting assembly 50 may be employed to mount system components 48 on beams having other cross sectional shapes that may include one or more flat outer sides 64. As used herein, the term "beam" is intended to broadly include, without limitation, a variety of elongate structural members that are used to carry or transfer loads, including but not limited to ties, braces, struts, links, and other similar structural members. In this example, the longitudinal axis 65 of the cross section of the brace beam 38 extends in a direction that is generally perpendicular to the width **"W"** of the aft fairing 34 (Figure 3).

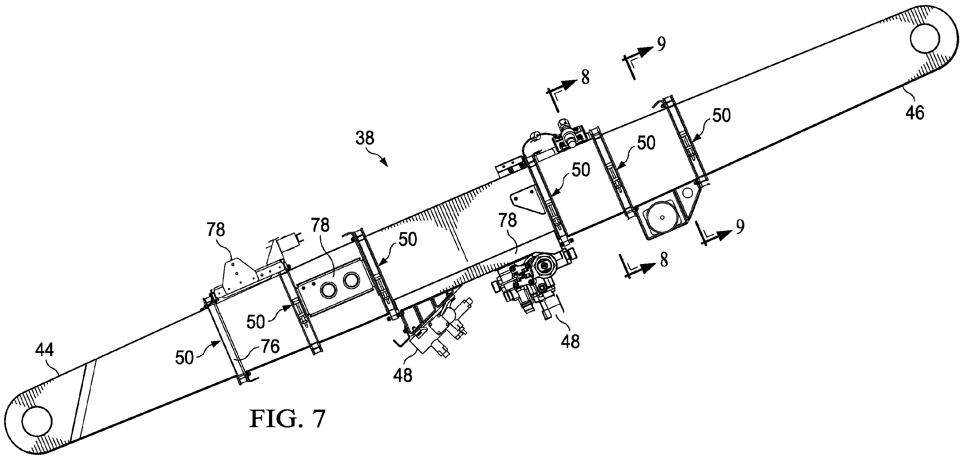

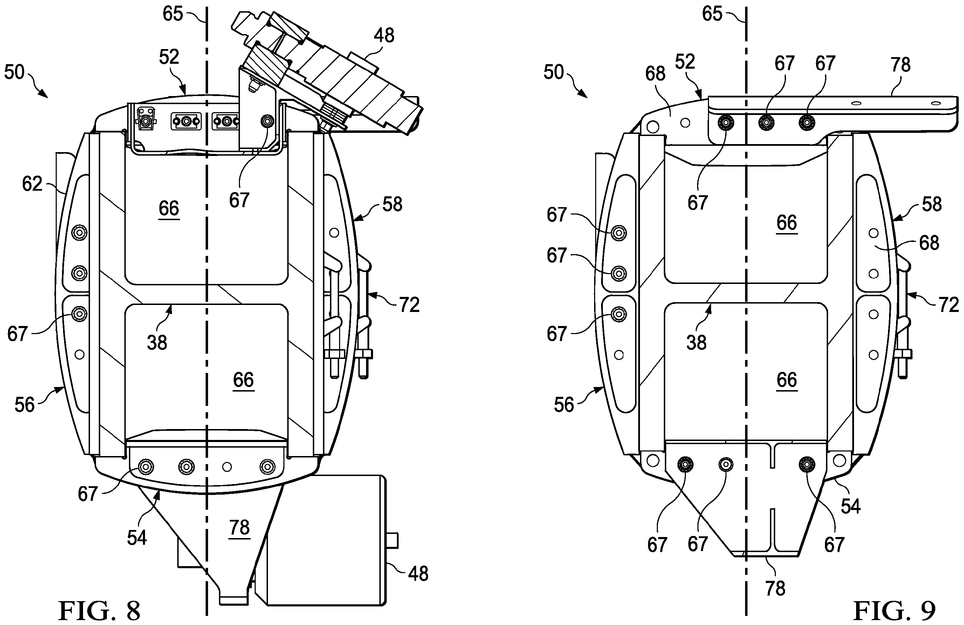

Each of the mounting assemblies 50 comprises first, second, third and fourth adapter members 52, 54, 56, 58 clamped to the brace beam 38 by a surrounding loop-like strap 70. Each of the adapter members 52-58 includes an inner face 60 that engages and lies substantially flush against one of the sides 64 of the beam 38. Each of the adapter members 52-58 further comprises a generally curved outer face 62 that is provided with a recess or groove 76 (Figure 5A) therein in which the strap 70 is held. The strap 70 may comprise any suitable material such as a flexible metal, and functions as a band clamp to clamp the adapter members 52-58 against the sides 64 of the beam 38. A tensioning device 72, which may comprise a conventional screw assembly 70, may be used to tension the strap 70. Tensioning the strap 70 draws the strap 70 down against the adapter members 52-58, causing the strap 70 to conform to the curved outer faces 62 of the adapter members 52-58 and apply a clamping force which holds the adapter members 52-58 tightly against the beam 38. Adapter members 52, 54 may include portions 74 that extend into the open interior 66 of the beam 38. One or more of the adapter members 52-58 may include through holes 68 therein which are adapted to receive fastener members 67 (see Figures 8 and 9) used to attach either system components 48 or later discussed support brackets 78 (see Figures 7-9) directly to the adapter members 52-58. Because the mounting through holes 68 are located beneath (i.e. in-board) of the strap 70, the system components 48 may be mounted closer to the brace beam 38, providing more compact packaging of the system components 48 and the brace beam 38 within the fairing 34 (Figure 2).

Figure 6A illustrates additional details of the strap 70 shown in Figure 5, prior to be installed and tightened around the adapter members 52-58. The strap 70 includes a band-like strap body 73 having overlapping ends 73a that lie substantially in the same curved plane. A pair loops 75 attached to the strap body 73 are wrapped around trunnions 77. The tensioning device 72 may comprise a T-bolt 79 attached between the trunnions 77. Tightening of the T-bolt 79 draws the trunnions 77 toward each other, causing the strap body 73 to close. When the strap 70 has been installed around the adapter members 52-58, tightening the T-bolt 79 causes the strap body 73 to be tensioned down onto the adapter members 52-58, clamping the latter tightly against the beam 38,

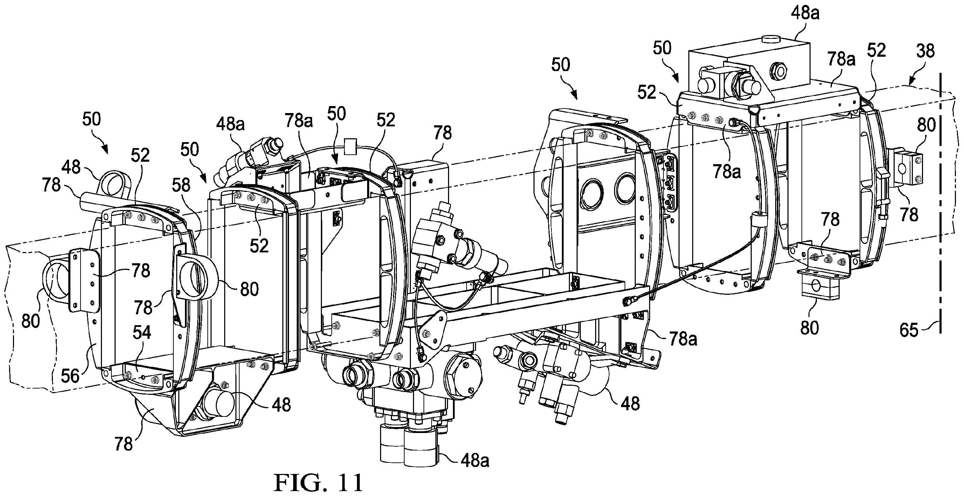

Referring now to Figures 7-11, the mounting assemblies 50 may be positioned and clamped around the beam 38 at spaced apart locations appropriate for mounting the desired system components 48 on the beam 38. In one embodiment, components 48 may be directly mounted on the adapter members 52-58 by fasteners (not shown) passing through the mounting through-holes 68 in one or more of the adapter members 52-58. However, the system components 48 may be directly mounted on the adapter members 52-58 using other fastening techniques and mechanisms well known in the art. It may also be possible to attach system components 48 such as wires or tubes directly the adapter members 52-58 by passing them through the mounting through holes 68. In some applications, certain of the system components 48, such as components 48a shown in Figure 11 may be mounted on either of the adapter members 52, 54 so that the component 48a lies generally within width **"w"** (Figure 5) of the adapter member 52, 54 to which it is attached, resulting in the beam 38 and mounted components 48a occupying a minimum space within the width **"W"** (Figure 3) of the aft fairing 34.

As an alternative to mounting the system components 48 directly on the adapter members 52-58, the system components 48 may be attached to brackets 78 which in turn are secured to the adapter members 52-58 by any suitable means, such as by fasteners 67 passing through the mounting through holes 68. Guides or supports 80 (Figure 11) may be mounted directly on the adapter members 52-54, or on brackets 78 attached to the adapter members 53-54 in order to guide and/or support tubing or wiring (not shown in Figure 11).

The brackets 78 may extend longitudinally along the brace beam 38 and be attached to adjacent ones of the mounting assemblies 50. For example, as shown in Figure 11, mounting brackets 78a supporting one or more system components 48a may be attached either to adapter members 52 or 54 of adjacent ones of the mounting assemblies 50.

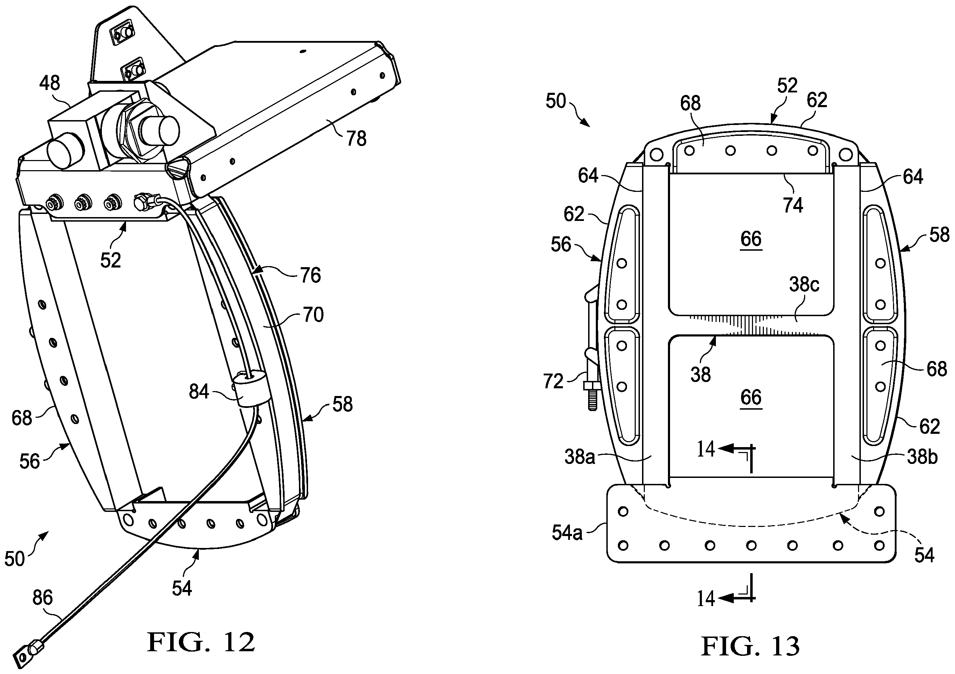

Figure 12 illustrates a mounting assembly 50 having an electrical wiring support guide 84 attached to one of the adapter members 58. The wiring support guide 84 supports and guides an electrical wire 86 that is connected to a bracket 78. The bracket 78 is secured to adapter member 52 and supports a system component 48.

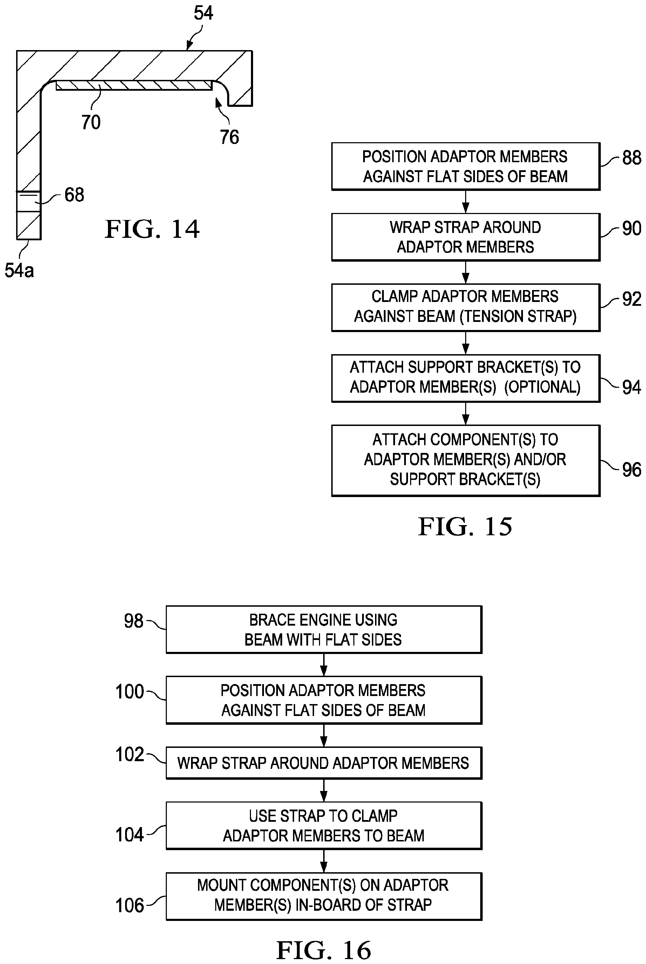

Figures 13 and 14 illustrate an alternate embodiment in which one of the adapter members 54 includes an outwardly extending integrally formed support bracket 54a having mounting through holes 68 adapted to receive fasteners (not shown) for mounting system components 48 on the bracket 54a.

Figure 15 illustrates the overall steps of a method of attaching system components 48 to a beam 38 having one or more flat sides, such as the rectangularly shaped beam 38 previously described. Beginning at 88, adapter members 52-58 are positioned against flat sides 64 of the beam 38. At 90, a strap 70 is wrapped around the adapter members 52-58, and at 92 the adapter members 52-58 are clamped against the beam 38 by tensioning the strap 70. Optionally, at step 94, one or more support brackets 78 may be attached to one or more of the adapter members 52-54, and at step 96, system components 48 are be attached to either one or more of the adapter members 52-54 and/or the support brackets 78.

Figure 16 illustrates the overall steps of a method of reducing aerodynamic drag on an engine pylon 30. Beginning at 98, an engine 22 is braced using beams 38 having flat sides 64. At 100, adapter members 52-58 are positioned against the flat sides 64 of the beam 38. At 102, a strap 70 is wrapped around the adapted members 52-58, and at 104, the strap 70 is used to clamp the adapter members 52-58 to the beam 38. At 106, one or more system components 48 may be mounted on the adapter members 52-58 either directly, or using brackets 78, at locations in-board of the strap 70.

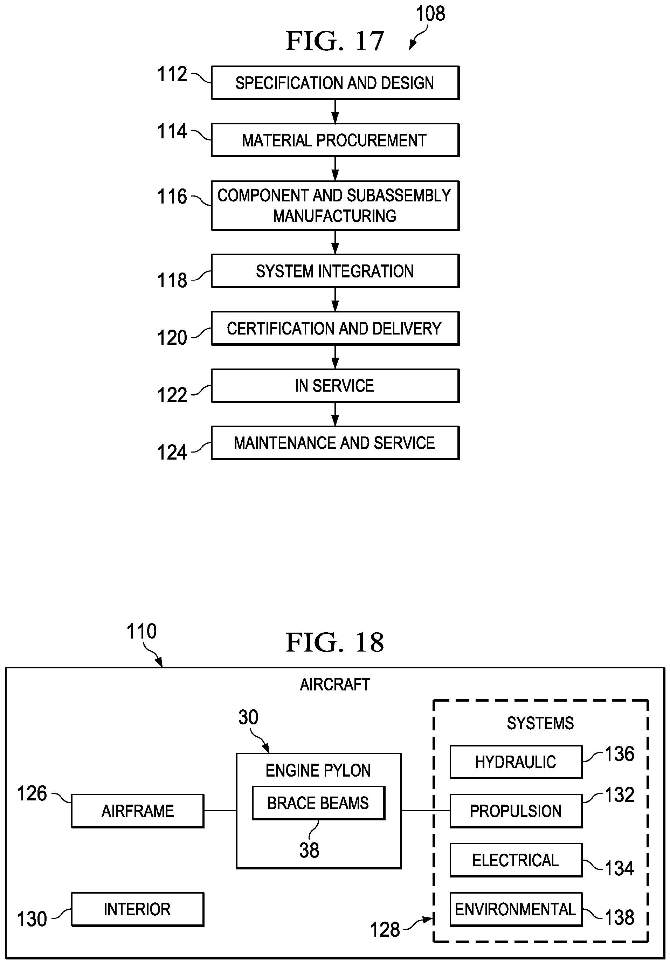

Embodiments of the disclosure may find use in a variety of potential applications, particularly in the transportation industry, including for example, aerospace, marine, automotive applications and other application where it is necessary or desirable to mount system components on beams and similar structures. Thus, referring now to FIGS. 17 and 18, embodiments of the disclosure may be used in the context of an aircraft manufacturing and service method 108 as shown in Figure 17 and an aircraft 110 as shown in Figure 18. Aircraft applications of the disclosed embodiments may include, for example, without limitation, mounting system components on beams, braces, links and struts used in the aircraft 110. During pre-production, exemplary method 108 may include specification and design 112 of the aircraft 110 and material procurement 114. During production, component and subassembly manufacturing 116 and system integration 118 of the aircraft 108 takes place. Thereafter, the aircraft 110 may go through certification and delivery 120 in order to be placed in service 122. While in service by a customer, the aircraft 110 is scheduled for routine maintenance and service 124, which may also include modification, reconfiguration, refurbishment, and so on.

Each of the processes of method 108 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 18, the aircraft 110 produced by exemplary method 108 may include an airframe 126 with a plurality of systems 128 and an interior 130. Examples of high-level systems 128 include one or more of a propulsion system 132, an electrical system 134, a hydraulic system 136, and an environmental system 138. The disclosed method and mounting assembly 50 may be employed to mount components of the systems 128 on brace beams 38 within engine pylons 30 used to mount engines forming part of the propulsion system 132 on the airframe 126. Any number of other systems may be included. Although an aerospace example is shown, the principles of the disclosure may be applied to other industries, such as the marine and automotive industries.

Systems and methods embodied herein may be employed during any one or more of the stages of the production and service method 108. For example, components or subassemblies corresponding to production process 116 may be fabricated or manufactured in a manner similar to components or subassemblies produced while the aircraft 110 is in service. Also, one or more apparatus embodiments, method embodiments, or a combination thereof may be utilized during the production stages 116 and 118, for example, by substantially expediting assembly of or reducing the cost of an aircraft 110. Similarly, one or more of apparatus embodiments, method embodiments, or a combination thereof may be utilized while the aircraft 110 is in service, for example and without limitation, to improve maintenance and service 124 and/or to reduce operating costs.

The description of the different advantageous embodiments has been presented for purposes of illustration and description and is not intended to be exhaustive or limited to the embodiments in the form disclosed. Many modifications and variations within the limitation of the appended claims will be apparent to those of ordinary skill in the art.

Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An assembly (50) for mounting a component (48) on a beam (38) having at least one generally flat side (64), comprising:
at least a first adapter member (52-58) having a generally flat face (60) configured to engage the flat side (64) of the beam (38) and adapted to have a component (48) attached thereto; and
a strap (70) for clamping the first adapter member (52-58) against the generally flat side (64) of the beam (38),
**characterized in that** the assembly (50) further comprises:
second, third and fourth adapter members (52-58) each having a generally flat face (60) configured to engage the beam (38) and a generally curved face (62), and
wherein the strap (70) is configured to be tensioned such as to clamp the first, second, third and fourth adapter members (52-58) against the beam (38).

2. The assembly of claim 1, wherein:
the adapter members (52-58) include a generally curved outer face (62), and
the strap (70) generally conforms to and bears against the curved outer faces (62) of the adapter members (52-58).

3. The assembly of claim 2, wherein the strap (70) is recessed (76) within the outer faces (62) of the adapter members (52-58).

4. The assembly of claim 1, further comprising:
a device (72) for tightening the strap (70) against the adapter members (52-58).

5. The assembly of claim 1, wherein at least one of the adapter members (52-58) includes at least one mounting through hole (68) therein beneath the strap (70) for receiving a fastener (67) for fastening the component (48) to the adapter member (52-58).

6. The assembly of claim 1, wherein the second adapter member (52-58) is spaced apart from the first adapter member (52-58), the second adapter member (52-58) having a generally flat face (60) for engaging a flat side (64) of the beam (38) and adapted to have a component (48) attached thereto; the assembly further comprising:
a second strap (70) for clamping the second adapter member (52-58) against the generally flat side (64) of the beam (38); and
a component support bracket (78) extending between and secured to the first and second adapter members (52-58).

7. The assembly of claim 1, wherein the beam (38) has an open interior area (66) and a portion (74) of at least one of the adapter members (52-58) is configured to extend into the open interior (66) area of the beam (38).

8. The assembly of claim 1, further comprising:
a support bracket (54a) formed integral with at least one of the adapter members (54) on which the component (48) may be mounted.

9. A method of reducing aerodynamic drag on an aerospace engine pylon (30), comprising:
bracing an engine (22) held by the pylon (30) using a beam (38) having two substantially flat sides (64);
positioning adapter members (52-58) against the flat sides (64) of the beam (38); wrapping a strap (70) around the adapter members (52-58);
using the strap (70) to clamp the adapter members (52-58) to the beam (70); and
mounting at least one component (48) on one of the adapter members (52-58).

10. The method of claim 9, wherein mounting the at least one component (48) is performed by fastening the component (48) to the one adapter member (52-58) at a location in-board of the strap (70).

## Patentansprüche

1. Baugruppe (50) zum Montieren einer Komponente (48) an einem Träger (38), der mindestens eine im Wesentlichen flache Seite (64) aufweist, mit:
mindestens einem ersten Adapterelement (52-58), das eine im Wesentlichen flache Fläche (60) aufweist, die dazu konfiguriert ist, mit der flachen Seite (64) des Trägers (38) ineinander zu greifen und dazu ausgelegt ist, eine Komponente (48) an sich angebracht aufzuweisen; und
einem Schellenband (70) zum Klemmen des ersten Adapterelements (52-58) gegen die im Wesentlichen flache Seite (64) des Trägers (38),
**dadurch gekennzeichnet, dass** die Baugruppe (50) des Weiteren Folgendes aufweist:
zweite, dritte und vierte Adapterelemente (52-58), die jeweils eine im Wesentlichen flache Fläche (60) aufweisen, die dazu konfiguriert ist, mit dem Träger (38) ineinander zu greifen und eine im Wesentlichen gekrümmte Fläche (62) aufweist, und wobei die Schellenband (70) dazu konfiguriert ist, unter Spannung gesetzt zu werden, um die ersten, zweiten, dritten und vierten Adapterelemente (52-58) gegen den Träger (38) zu klemmen.

2. Baugruppe nach Anspruch 1, wobei:
die Adapterelemente (52-58) eine im Wesentlichen gekrümmte Außenfläche (62) aufweisen, und
das Schellenband (70) im Wesentlichen der gekrümmten Außenfläche (62) der Adapterelemente (52-58) angepasst ist und sich an diese anlehnt.

3. Baugruppe nach Anspruch 2, wobei das Schellenband (70) in den Außenflächen (62) der Adapterelemente (52-58) zurückgesetzt ist.

4. Baugruppe nach Anspruch 1, des Weiteren mit:
einer Einrichtung (72) zum Festziehen des Schellenbands (70) gegen die Adapterelemente (52-58).

5. Baugruppe nach Anspruch 1, wobei mindestens eines von den Adapterelementen (52-58) mindestens ein Befestigungsdurchgangsloch (68) darin unterhalb des Schellenbands (70) aufweist, um ein Befestigungselement (67) zum Befestigen der Komponente (48) an dem Adapterelement (52-58) aufzunehmen.

6. Baugruppe nach Anspruch 1, wobei:
das zweite Adapterelement (52-58) von dem ersten Adapterelement (52-58) beabstandet ist, wobei das zweite Adapterelement (52-58) eine im Wesentlichen flache Fläche (60) zum Ineinandergreifen mit einer flachen Seite (64) des Trägers (38) aufweist und dazu ausgebildet ist, eine Komponente (48) daran angebracht aufzuweisen; wobei die Baugruppe Folgendes aufweist:
ein zweites Schellenband (70) zum Klemmen des zweiten Adapterelements (52-58) gegen die im Wesentlichen flache Seite (64) des Trägers (38); und
eine Komponentenstützklemme (78), die sich zwischen dem ersten und dem zweiten Adapterelement (52-58) erstreckt und daran gesichert ist.

7. Baugruppe nach Anspruch 1, wobei der Träger (38) einen offenen Innenbereich (66) aufweist und ein Abschnitt (74) von mindestens einem der Adapterelemente (52-58) dazu konfiguriert ist, sich in den offenen Innen(66)-Bereich des Trägers (38) zu erstrecken.

8. Baugruppe nach Anspruch 1, des Weiteren mit:
einer Stützklammer (54a), die integral mit mindestens einem von den Adapterelementen (54) ausgebildet ist, an dem die Komponente (48) befestigt werden kann.

9. Verfahren zum Reduzieren des aerodynamischen Widerstands an einem Luftfahrzeugtriebwerkspylon (30), mit den folgenden Schritten:
Umgeben eines Motors (22), der durch den Pylon (30) gehalten wird, unter Nutzung eines Trägers (38), der zwei im Wesentlichen flache Seiten (64) aufweist;
Positionieren von Adapterelementen (52-58) gegen die flachen Seiten (64) des Trägers (38);
Umschlingen eines Schellenbands (70) um die Adapterelemente (52-58);
Nutzen des Schellenbands (70) zum Klemmen der Adapterelemente (52-58) an den Träger (70); und
Befestigen mindestens einer Komponente (48) an einem der Adapterelemente (52-58).

10. Verfahren nach Anspruch 9, wobei das Befestigen der mindestens einen Komponente (48) durch Befestigen der Komponente (48) an dem einen Adapterelement (52-58) an einem Ort innenseitig des Schellenbands (70).

## Revendications

1. Ensemble (50) pour monter un composant (48) sur une traverse (38) présentant au moins un côté essentiellement plat (64), comprenant:
au moins un premier élément adaptateur (52-58) présentant une face essentiellement plate (60) configurée de manière à engager le côté plat (64) de la traverse (38) et adapté pour avoir un composant (48) attaché à celui-ci; et
une sangle (70) pour serrer le premier élément adaptateur (52-58) contre le côté essentiellement plat (64) de la traverse (38),
**caractérisé en ce que** l'ensemble (50) comprend en outre:
des deuxième, troisième et quatrième éléments adaptateurs (52-58) présentant chacun une face essentiellement plate (60) configurée de manière à engager la traverse (38) et une face essentiellement courbe (62), et
dans lequel la sangle (70) est configurée de manière à être tendue de façon à serrer les premier, deuxième, troisième et quatrième éléments adaptateurs (52-58) contre la traverse (38).

2. Ensemble selon la revendication 1, dans lequel:
les éléments adaptateurs (52-58) présentent une face extérieure essentiellement courbe (62), et
la sangle (70) épouse essentiellement et s'appuie contre la face extérieure courbe (62) des éléments adaptateurs (52-58).

3. Ensemble selon la revendication 2, dans lequel la sangle (70) est évidée (76) à l'intérieur des faces extérieures (62) des éléments adaptateurs (52-58).

4. Ensemble selon la revendication 1, comprenant en outre un dispositif (72) pour serrer la sangle (70) contre les éléments adaptateurs (52-58).

5. Ensemble selon la revendication 1, dans lequel au moins un des éléments adaptateurs (52-58) comporte au moins un trou traversant de montage (68) dans celui-ci en dessous de la sangle (70) destiné à recevoir un élément de fixation (67) pour attacher le composant (48) à l'élément adaptateur (52-58).

6. Ensemble selon la revendication 1, dans lequel:
le deuxième élément adaptateur (52-58) est espacé du premier élément adaptateur (52-58), le deuxième élément adaptateur (52-58) présentant une face essentiellement plate (60) pour engager un côté plat (64) de la traverse (38) et adapté pour avoir un composant (48) attaché à celui-ci;
l'ensemble comprenant en outre:
une deuxième sangle (70) pour serrer le deuxième élément adaptateur (52-58) contre le côté essentiellement plat (64) de la traverse (38); et
une console de support de composant (78) qui s'étend entre et qui est fixée aux premier et deuxième éléments adaptateurs (52-58).

7. Ensemble selon la revendication 1, dans lequel la traverse (38) présente une région intérieure ouverte (66) et une partie (74) d'au moins un des éléments adaptateurs (52-58) est configurée de manière à s'étendre dans la région intérieure ouverte (66) de la traverse (38).

8. Ensemble selon la revendication 1, comprenant en outre:
une console de support (54a) formée intégralement avec au moins un des éléments adaptateurs (54) sur lequel le composant (48) peut être monté.

9. Procédé pour réduire la traînée aérodynamique sur un pylône réacteur aérospatial (30), comprenant les étapes suivantes:
caler un réacteur (22) maintenu par le pylône (30) en utilisant une traverse (38) présentant deux côtés sensiblement plats (64);
positionner des éléments adaptateurs (52-58) contre les côtés plats (64) de la traverse (38);
enrouler une sangle (70) autour des éléments adaptateurs (52-58);
utiliser la sangle (70) pour serrer les éléments adaptateurs (52-58) sur la traverse (70); et
monter au moins un composant (48) sur un des éléments adaptateurs (52-58).

10. Procédé selon la revendication 9, dans lequel le montage dudit au moins un composant (48) est exécuté en attachant le composant (48) à un élément adaptateur (52-58) en un endroit situé à l'intérieur de la sangle (70).
